# DEMANDE DE BREVET EUROPEEN

(11) **EP 3 422 523 A1**
(43) Date de publication de la demande: **02.01.2019**
(21) Numéro de dépôt: 18180471.7
(22) Date de dépôt: 28.06.2018
(51) Int. Cl.: H02J 3/38, H02J 3/28

(54) **PROCÉDÉ ET INSTALLATION DE PRODUCTION LOCALE D'UNE PUISSANCE ÉLECTRIQUE**

(30) Priorité: 28.06.2017 FR 1755921
(71) Demandeur: SOCIETE CIVILE DE BREVETS MATIERE, 15000 Aurillac (FR)
(72) Inventeur: MATIERE, Marcel, 15000 AURILLAC (FR)
(74) Mandataire: Lavoix

(57) **Abrégé**

L'invention concerne un procédé de production locale d'une puissance électrique destinée à répondre à des besoins variables de consommation dans un territoire isolé équipé d'un réseau local de distribution d'électricité (3), alimenté par au moins deux dispositifs de production d'électricité à partir d'énergies renouvelables, respectivement un premier dispositif (4) de transformation de l'énergie du rayonnement solaire et un second dispositif (5) de transformation de l'énergie hydraulique d'une chute d'eau. Le premier dispositif de transformation de l'énergie solaire est une centrale solaire (4) ayant une puissance nominale correspondant à une valeur globale estimée des besoins de consommation des usagers dans le territoire et le second dispositif de transformation de l'énergie hydraulique est une centrale hydroélectrique (5) ayant une puissance nominale du même ordre que celle de la centrale solaire (4). La réserve d'eau (6) de la centrale hydroélectrique (5) est alimentée à partir d'une pluralité de prises d'eau (15) ménagées sur au moins une partie des cours d'eau (11) du bassin d'écoulement.

## Description

L'invention a pour objet un procédé et une installation de production locale d'une puissance électrique destinés à répondre à des besoins variables de consommation dans un territoire isolé.

Dans la plupart des pays industrialisés, la production d'énergie électrique est centralisée, la puissance nécessaire pour répondre à la demande d'énergie correspondant aux besoins généraux de consommation étant fournie, pour l'essentiel, par un certain nombre de centrales de production d'électricité de très grande puissance, qui sont réparties sur l'ensemble du territoire national, et sont raccordées à un réseau public de transport d'électricité permettant de distribuer l'énergie électrique dans tout le territoire.

Ce réseau public est constitué d'un ensemble maillé de lignes de transport du courant à plus ou moins haute tension, chaque niveau de tension étant prévu pour une plage d'utilisation spécifique. En effet, le transport du courant est onéreux et engendre des pertes d'énergie qui dépendent, notamment, de la tension. La puissance produite dans les centrales principales est, donc, habituellement, transportée vers les consommateurs, d'abord sous une tension très élevée, par exemple 400 kV, puis répartie par des postes de transformation dans un réseau moyenne tension, par exemple 50 kV sur lequel est raccordé un réseau local à basse tension, pour l'alimentation des usagers, par exemple en 18 kVA sous 230 V ou 36 kVA sous 230/400 V.

Depuis quelques années, on a pris conscience de la nécessité, pour la protection de l'environnement, de réduire, autant que possible, les émissions de gaz carbonique ou de particules produites par la combustion des produits pétroliers, qui ont des effets néfastes pour la santé et pour le climat.

L'utilisation de l'énergie électrique ne présente pas de tels inconvénients et devrait donc se développer dans l'avenir, en particulier pour le chauffage des habitations ou pour les transports, notamment par l'usage de véhicules électriques. Il sera, donc, nécessaire d'augmenter la production de puissance électrique et son acheminement vers l'ensemble des consommateurs en tenant compte, cependant, de la volonté de réduire le recours à l'énergie nucléaire qui présente des risques et pose le problème du stockage des déchets.

Actuellement, les pouvoirs publics favorisent, donc, la construction de minicentrales réparties sur le territoire et utilisant une énergie renouvelable telle que celle du vent ou du soleil, afin de produire une puissance électrique additionnelle susceptible d'être injectée dans le réseau public de transport pour compléter la puissance acheminée par celui-ci à partir des centrales principales de production.

En particulier, on a cherché à développer l'utilisation de l'énergie éolienne qui présente, cependant, l'inconvénient d'une grande irrégularité. De plus, pour capter des vents de puissance suffisante, les hélices, de grand diamètre, sont placées à une très grande hauteur sur des mats très visibles sur l'horizon, ce qui perturbe l'environnement et entraîne, souvent, des oppositions de la part des riverains.

L'énergie solaire, en revanche, présente moins d'inconvénients pour l'environnement car elle permet de produire de l'électricité, par effet photoélectrique, au moyen de modules photovoltaïques constituant des panneaux plats de faible épaisseur et, donc, moins visibles dans le paysage.

Toutefois, la production d'une centrale solaire est également irrégulière en raison des variations quotidiennes et saisonnières de l'énergie captée par les panneaux.

De plus, ces deux formes d'énergie, outre leur caractère intermittent, posent un problème pour l'équilibre du réseau et ne contribuent pas à la stabilité de fréquence de celui-ci.

Dans le passé, les centrales solaires, comme les éoliennes assuraient seulement une production mineure dans le mix énergétique, susceptible d'être injectée dans le réseau public de distribution pour s'ajouter à l'énergie produite de manière décentralisée.

Mais aujourd'hui, la part de ces énergies renouvelables intermittentes augmente sensiblement pour atteindre des niveaux tels qu'il devient nécessaire de développer en parallèle d'autres productions d'énergie pilotables pouvant participer à la stabilité de fréquence. Il semble, en particulier, que l'hydroélectricité puisse jouer un rôle majeur dans cette évolution pour accompagner le développement du solaire

Par ailleurs, une production dispersée de puissance électrique et son acheminement dans le réseau peut nécessiter l'installation de nouvelles lignes coûteuses à réaliser, d'autant plus que, pour la protection de l'environnement, il pourrait être jugé nécessaire d'enterrer les lignes de transport du courant.

L'inventeur a, donc, eu l'idée que, pour des régions relativement isolées, c'est-à-dire éloignées des centrales principales, il serait plus rentable de produire sur place, à partir d'énergie renouvelable, une puissance suffisante pour répondre, autant que possible, aux besoins des consommateurs dans une zone située dans le voisinage immédiat du lieu de production, à une distance assez réduite pour ne pas engendrer de sensibles pertes en lignes.

Pour résoudre un tel problème en utilisant seulement des énergies renouvelables, il faut réaliser une centrale de production électrique ayant une puissance relativement importante. Or, une éolienne, même de grande hauteur, ne peut produire qu'une puissance limitée, de l'ordre de 2 à 3 MW et plusieurs machines doivent être très écartées les unes des autres. Pour répondre à la demande en électricité des consommateurs, dans une zone comportant, par exemple, plusieurs milliers d'habitants et des activités industrielles et commerciales, il faudrait, donc, construire de véritables champs d'éoliennes très étendus, comportant plusieurs dizaines de machines, ce qui n'est possible que dans certaines régions peu habitées et sans intérêt environnemental.

En revanche, comme on l'a indiqué, les centrales solaires ne présentent pas de tels inconvénients et la puissance électrique qu'elles peuvent produire dépend essentiellement du nombre de modules et de la surface couverte. C'est ainsi que, pour une production individuelle, on peut placer un petit nombre de panneaux sur le toit d'une maison ou d'un bâtiment industriel, mais on peut, aussi, rassembler un très grand nombre de modules sur un espace important pour une production plus exploitable industriellement. Il est ainsi possible de réaliser une véritable centrale électrique dont la puissance peut être, par exemple, d'environ 10 MW pour une surface de panneaux d'une vingtaine d'hectares, mais peut aussi atteindre 100 MW, ou même plus si le site de construction le permet.

Or, l'inventeur s'est avisé que, même dans les pays industrialisés et relativement denses, il existe des régions moyennement peuplées et à vocation agricole, dans lesquelles peuvent être réalisées des centrales solaires couvrant une surface importante et pouvant, cependant, être bien intégrées dans l'environnement.

En France, par exemple, certaines régions, souvent bien ensoleillées ont conservé une activité agricole, en particulier d'élevage et leur relief, modérément vallonné, est favorable à la construction de centrales solaires dont la capacité de production permettrait de répondre aux besoins de consommation d'une population d'importance moyenne.

Cependant, pour répondre aux besoins d'une collectivité, il est nécessaire d'assurer une certaine régulation de la puissance électrique fournie au réseau de distribution par la centrale solaire pour faire face à la variabilité de la demande en énergie. Il faudrait, donc, développer en parallèle, une autre production d'énergie pilotable permettant d'assurer une stabilité de fréquence. L'hydroélectricité peut jouer un rôle majeur dans cette évolution pour accompagner le développement du solaire puisqu'elle constitue une énergie renouvelable, pilotable, pouvant contribuer à la stabilité du réseau.

L'idée d'associer l'énergie hydraulique à l'énergie solaire a déjà été proposée, naguère, dans le brevet belge N° 875508 qui décrit une installation de production de puissance comprenant un dispositif d'entraînement hydraulique d'un générateur d'électricité alimenté par un bassin de réserve d'eau autour duquel sont disposés des panneaux solaires qui subissent le réfléchissement de l'énergie solaire sur la surface de l'eau et produisent, ainsi, une énergie électrique d'origine solaire dont les variations quotidiennes ou saisonnières sont atténuées par la complémentarité de l'énergie solaire et de l'énergie hydroélectrique produite par le générateur.

Toutefois, une telle disposition, dans laquelle l'énergie du soleil est simplement captée par réflexion sur la surface du bassin ne pourrait, évidemment, pas produire une puissance électrique importante.

Plus récemment, on a aussi proposé, dans le document FR-A-2 983 921, de combiner deux dispositifs de transformation d'énergie renouvelable pour produire une énergie électrique, respectivement un dispositif de transformation en énergie électrique de l'énergie potentielle de l'eau stockée dans un réservoir et un dispositif de transformation de l'énergie solaire en une énergie électrique apte à faire fonctionner une pompe permettant de former une réserve tampon d'énergie hydraulique qui peut être libérée en fonction des besoins d'alimentation du réseau sur lequel est branché le dispositif de transformation de l'énergie de la chute d'eau. Dans une telle disposition, il n'y a pas, à proprement parler, de régulation de la puissance d'un système mixte d'énergie hydraulique et solaire. En effet, l'énergie solaire sert seulement d'énergie d'appoint pour faire fonctionner une pompe remontant une certaine quantité d'eau dans le réservoir, en dehors des périodes de production hydroélectrique.

Par ailleurs, le document US 2014/0200723 A1 décrit un dispositif très complexe de distribution, vers une charge, de l'énergie produite par différentes sources ou stockée dans des batteries. Toutes ces sources d'énergie peuvent être utilisées en même temps mais rien, dans ce document, n'indique que la source d'énergie photovoltaïque soit une centrale solaire capable de produire une puissance assez importante pour répondre, à elle seule, aux besoins globaux de consommation de l'ensemble des usagers dans un territoire isolé, ni que cette centrale solaire soit associée à une centrale hydroélectrique ayant, elle-même, une puissance du même ordre, afin de pouvoir compenser, à tout moment, les variations inévitables de la puissance fournie par le rayonnement solaire.

De plus, pour obtenir une telle puissance, il faut, nécessairement, utiliser une centrale hydraulique exploitant la puissance d'une chute d'eau.

Or, même dans une région peu industrialisée ayant conservé une activité agricole, les besoins de consommation d'une population de quelques milliers d'habitants restent importants et une centrale hydroélectrique de type classique, apte à répondre à de tels besoins devrait être alimentée par une réserve d'eau de grandes dimensions, retenue par un barrage d'assez grande hauteur provoquant, inévitablement, la submersion d'une partie de la vallée.

Cependant, la réglementation actuelle, ainsi que l'opinion publique, rendent pratiquement impossible la réalisation, dans une région isolée et de caractère agricole, d'une centrale hydroélectrique de type classique risquant de causer des dommages irréversibles à l'environnement.

La présente invention a, donc, pour objet de résoudre tout cet ensemble de problèmes, grâce à un procédé et une installation permettant de produire localement et seulement à partir d'énergies renouvelables, une puissance électrique assez importante et pilotable, donc garantie, pour répondre, en permanence, aux besoins variables des consommateurs dans un territoire isolé.

De façon connue, ce territoire est équipé d'un réseau local de distribution d'électricité qui peut être alimenté par au moins deux dispositifs de production d'électricité à partir d'énergies renouvelables, respectivement un premier dispositif de transformation de l'énergie du rayonnement solaire comportant des moyens de production d'un courant électrique de base à partir du rayonnement solaire et des moyens de transformation dudit courant de base en un courant alternatif ayant des caractéristiques adaptées audit réseau local de distribution, un second dispositif de transformation de l'énergie hydraulique d'une chute d'eau comportant au moins un groupe hydroélectrique, placé à niveau inférieur et alimenté par au moins une conduite forcée, à partir d'une réserve d'eau ménagée à un niveau supérieur, pour la production d'un courant électrique ayant des caractéristiques adaptées au réseau local de distribution, et des moyens d'injection dans ledit réseau local, des courants adaptés produits, respectivement, par les deux dispositifs de transformation d'énergie.

Conformément à l'invention, le premier dispositif de transformation de l'énergie solaire est une centrale solaire ayant une puissance nominale correspondant à une valeur globale estimée des besoins de consommation des usagers dans le territoire, le second dispositif de transformation de l'énergie hydraulique est une centrale hydroélectrique ayant une puissance nominale du même ordre que celle de la centrale solaire et, le territoire comportant un bassin versant dans lequel l'eau pluviale forme un ensemble de cours d'eau ayant des débits variables et s'écoulant vers l'aval, la réserve d'eau de la centrale hydroélectrique est constituée d'une pluralité de petites retenues collinaires réparties sur l'ensemble du bassin versant, qui sont ménagées sur au moins une partie des cours d'eau dudit bassin versant et sont reliées par des moyens de dérivation d'au moins une partie disponible du débit de chacun desdits cours d'eau, à un bassin tampon débouchant dans la conduite forcée d'alimentation du groupe hydroélectrique.

Par ailleurs, la centrale hydroélectrique est munie de moyens de réglage de la puissance qu'elle fournit, en fonction de la demande variable en électricité des usagers dans le territoire, afin que la puissance hydroélectrique ainsi produite compense, à tout moment, les variations de puissance quotidiennes ou saisonnières de la centrale solaire.

Dans un premier mode de réalisation de l'invention, la puissance nominale de la centrale solaire ainsi que celle de la centrale hydroélectrique correspondent à une valeur moyenne estimée des besoins de consommation dans le territoire qui peut, ainsi, se comporter de façon relativement autonome, le réseau local de distribution étant capable de répondre, en permanence, aux besoins normaux de consommation des usagers et c'est seulement en cas de dépassement desdits besoins que le surplus de puissance nécessaire est apporté par le réseau public de transport sur lequel reste branché le réseau local de distribution.

Cependant, dans un mode de réalisation préférentiel, la puissance nominale de la centrale solaire ainsi que celle de la centrale hydroélectrique correspondent à une valeur maximale estimée des besoins de consommation des usagers dans le territoire. De ce fait, les deux centrales étant, chacune, capables de fournir la puissance maximale nécessaire, le territoire alimenté par le réseau local peut alors se comporter de façon véritablement autonome par rapport au réseau public national. D'ailleurs, une telle disposition sera particulièrement intéressante pour l'alimentation en puissance électrique de régions totalement isolées mais bénéficiant d'un bon ensoleillement et d'un réseau dense de cours d'eau, par exemple en Afrique ou en Extrême-Orient.

En outre, selon une autre caractéristique particulièrement avantageuse, la centrale hydroélectrique est alimentée, à tout moment, par la totalité du débit disponible provenant de l'ensemble des cours d'eau, compte tenu des débits réservés satisfaisant les contraintes environnementales, ainsi que des autres utilisations de l'eau prévues à ce moment, de façon à fournir en permanence la puissance électrique maximale possible. Dans ce cas, le réseau local de distribution peut alimenter au moins une installation d'utilisation et de mise en réserve de la part de la puissance électrique globale fournie par les deux centrales, dépassant les besoins de consommation à l'instant considéré.

L'invention couvre également une installation de production locale d'une puissance électrique destinée à répondre à des besoins variables de consommation dans un territoire isolé équipé d'un réseau local de distribution d'électricité alimenté par au moins deux dispositifs de production d'électricité à partir d'énergies renouvelables, respectivement un premier dispositif de transformation de l'énergie du rayonnement solaire et un second dispositif de transformation de l'énergie hydraulique d'une chute d'eau.

Conformément à l'invention, le premier dispositif de transformation de l'énergie solaire est une centrale solaire ayant une puissance nominale correspondant à une valeur globale estimée des besoins de consommation des usagers dans le territoire, le second dispositif de transformation de l'énergie hydraulique est une centrale hydroélectrique ayant une puissance nominale du même ordre que celle de la centrale solaire et, le territoire comportant un bassin versant dans lequel l'eau pluviale forme un ensemble de cours d'eau ayant des débits variables et s'écoulant vers l'aval, la réserve d'eau de la centrale hydroélectrique est constituée d'une pluralité de petites retenues collinaires réparties sur l'ensemble du bassin versant, qui sont ménagées sur au moins une partie des cours d'eau du bassin et sont reliées par des moyens de dérivation d'au moins une partie disponible du débit de chacun desdits cours d'eau, à un bassin tampon débouchant dans la conduite forcée d'alimentation du groupe hydroélectrique.

Dans un mode de réalisation préférentiel, la puissance nominale de la centrale solaire ainsi que celle de la centrale hydroélectrique correspondent à une valeur maximale estimée des besoins de consommation des usagers dans le territoire. Dans ce cas, l'installation peut, avantageusement, comprendre des moyens d'utilisation et de mise en réserve du surplus de puissance produite par les deux centrales, respectivement solaire et hydroélectrique, dépassant la puissance seulement nécessaire pour répondre aux besoins de consommation des usagers à l'instant considéré.

En particulier, l'installation peut être équipée de moyens de production et de stockage d'hydrogène.

De façon particulièrement avantageuse, au moins une partie des cours d'eau du bassin versant sont munis de petites digues permettant, chacune, de ménager une retenue collinaire constituant une réserve d'eau secondaire et lesdites retenues collinaires sont réparties sur l'ensemble du territoire et sont reliées par des conduits de dérivation au bassin tampon alimentant la centrale hydroélectrique.

De préférence, ces réserves d'eau secondaires sont réparties sur l'ensemble du bassin versant, en tenant compte du relief de celui-ci, de façon à perturber le moins possible l'environnement, en particulier pour les activités agricoles ou touristiques.

De même, l'eau du bassin tampon alimentant la centrale hydroélectrique est retenue par un barrage ou une digue d'assez faible hauteur pour que le lac de retenue ainsi constitué ne perturbe pas sensiblement l'environnement. En effet, la capacité de ce bassin tampon peut être relativement limitée car le débit d'eau alimentant le groupe hydroélectrique peut être complété en permanence à partir des multiples réserves secondaires constituées par l'ensemble des retenues collinaires réparties sur tout le bassin versant.

Selon une autre caractéristique particulièrement avantageuse, les moyens d'amenée de l'eau au groupe hydroélectrique comprennent au moins une conduite forcée de section suffisante, compte tenu de la hauteur de chute, pour contenir au moins une partie de la quantité d'eau nécessaire au fonctionnement du groupe hydroélectrique pour la production d'une puissance électrique capable de compenser une insuffisance de la puissance fournie par la centrale solaire, pendant le temps nécessaire au rétablissement de cette puissance.

Par ailleurs, dans le cas où le bassin versant doit alimenter au moins un circuit d'utilisation de l'eau provenant d'au moins l'un des cours d'eau qui le traversent, la centrale hydroélectrique peut encore être alimentée par la partie disponible du débit desdits cours d'eau, après déduction du débit nécessaire audit circuit d'utilisation.

Cependant, la production de la centrale hydraulique peut, aussi, être réglée de façon que la puissance globale pouvant être injectée dans le réseau par les deux centrales, solaire et hydraulique, dépasse la puissance seulement nécessaire pour répondre aux besoins de consommation des usagers à l'instant considéré, le surplus de puissance servant alors à une autre utilisation, par exemple au fonctionnement d'une installation de production d'hydrogène liquide permettant de stocker ce surplus d'énergie.

Mais l'invention sera mieux comprise grâce à la description qui va suivre de certains modes de réalisation particuliers, présentés à titre d'exemples et illustrés par les dessins annexés.
La figure 1 est une vue schématique de dessus, de l'ensemble d'une installation pour la mise en oeuvre de l'invention.
La figure 2 est une vue schématique en coupe et partiellement en perspective, de l'ensemble de l'installation.
La figure 3 est une vue en coupe transversale d'une conduite de très grande section utilisable dans une installation du type représenté sur la figure 2.
La figure 4 est une vue en coupe transversale d'un autre mode de réalisation d'une conduite de grande section.

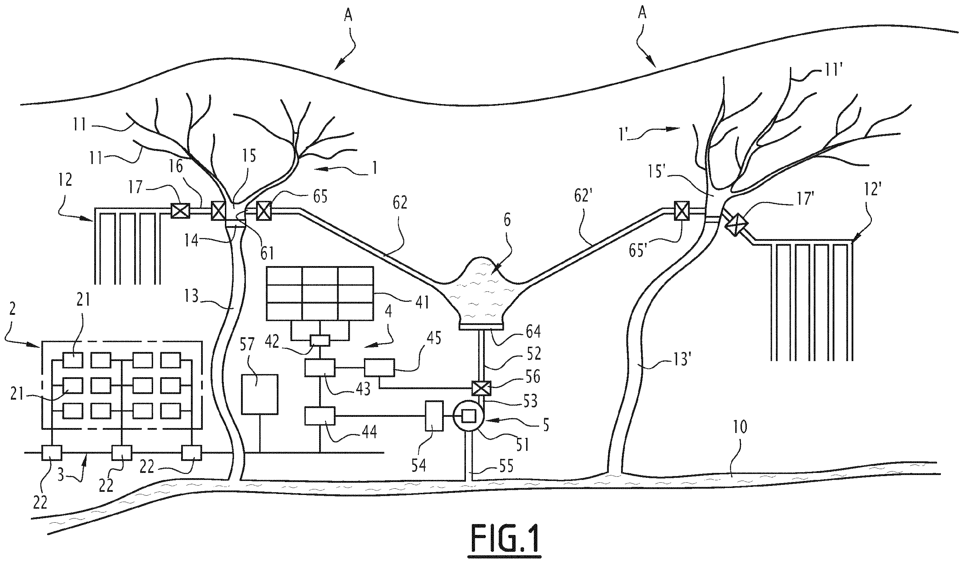

Sur la figure 1, on a représenté très schématiquement, en vue de dessus, un territoire pouvant avantageusement être équipé d'une installation selon l'invention. Comme indiqué plus haut, un tel territoire peut être considéré comme relativement isolé, dans la mesure où il se trouve dans une région assez peu urbanisée, ayant conservé une activité agricole, en particulier d'élevage comme, par exemple, en France, certaines régions vallonnées ou de moyenne montagne, autour du massif central ou bien des régions maritimes comme la Bretagne. De telles régions ont, souvent, un intérêt touristique ou, du moins, ont conservé des paysages agréables que l'on cherche à conserver et ne sont, donc, pas propices à l'installation de champs d'éoliennes pouvant fournir une puissance électrique en rapport avec les besoins locaux de consommation.

En revanche, l'inventeur s'est avisé que, même si les conditions météorologiques y varient facilement, de telles régions bénéficient souvent, d'une part, d'un taux moyen d'ensoleillement sur l'année favorable à l'utilisation de l'énergie solaire et, d'autre part, d'une pluviométrie assez abondante pour alimenter un réseau assez dense de cours d'eau.

A titre d'exemple, la figure 1 montre un territoire de ce type, comportant un bassin versant A dans lequel l'eau pluviale peut former un ensemble de cours d'eau de différentes importances 11, constituant un ou plusieurs réseaux ramifiés 1, 1'qui se rejoignent en ruisseaux ou torrents 13 s'écoulant vers l'aval en rejoignant, par exemple, une rivière 10 traversant la vallée.

Un tel territoire peut abriter une population d'importance moyenne, par exemple quelques milliers d'habitants, ainsi que des activités industrielles ou commerciales, qui se répartissent dans des bâtiments 21 plus ou moins dispersés ou bien regroupés dans des petites villes ou villages, symbolisés, sur le schéma, par la zone 2.

Tous ces bâtiments sont alimentés sous 230/400 V par des postes de transformation 22 branchés sur un réseau local 3 de distribution d'électricité qui est, lui-même, alimenté en moyenne tension par le réseau public général de transport d'électricité, alimenté par les centrales principales.

Comme on l'a indiqué, un tel territoire vallonné et ensoleillé est propice à l'installation d'une centrale solaire 4 comprenant un ensemble de modules photovoltaïques interconnectés électriquement, formant un certain nombre de panneaux 41 montés sur des châssis reposant sur le sol et fournissant, par captage de l'énergie solaire, un courant continu basse tension.

Ce courant continu est transformé par des onduleurs 42 en un courant alternatif à basse tension, par exemple 380 V, qui est transmis à un poste de transformation 43 apte à produire un courant alternatif ayant des caractéristiques adaptées à celles du courant transporté par le réseau local de distribution 3, par exemple une tension de 20 kV. Le poste de transformation 43 peut, ainsi, être branché sur un poste de livraison 44 permettant d'injecter ce courant adapté dans le réseau local de distribution 3.

Jusqu'à présent, une telle centrale solaire était utilisée seulement pour injecter une puissance complémentaire dans le réseau public.

Cependant, comme indiqué plus haut, l'inventeur a eu l'idée qu'en raison de la hauteur assez réduite des modules 41 qui peuvent, d'ailleurs, être cachés par un rideau d'arbres, il était possible, même dans un environnement protégé, de construire une centrale solaire 4 ayant une puissance assez importante pour répondre aux besoins globaux de l'ensemble des usagers dans le territoire, sans faire appel à la puissance transportée par le réseau public de distribution sauf, éventuellement, en période de pointe.

Par conséquent, selon une première caractéristique de l'invention, le nombre de panneaux photovoltaïques 41 et la surface couverte seront déterminés de façon à produire, en période de bon ensoleillement, une puissance nominale correspondant à une valeur globale estimée des besoins de consommation de l'ensemble des usagers.

En effet, pour décider des travaux d'équipement à effectuer, les autorités nationales ou régionales doivent, évidemment, connaitre les besoins à satisfaire dans l'avenir. Pour cela, connaissant la consommation actuelle correspondant à la puissance fournie par les postes de transformation, il sera possible, en se basant sur des études économiques et démographiques, de prévoir l'évolution des besoins et de déterminer une valeur estimée de la puissance à fournir, en tenant compte, notamment, de la nécessité de réduire la part des énergies carbonées dans les diverses activités et, par conséquent, de la hausse probable des besoins en électricité.

D'autre part, pour compenser les variations quotidiennes et saisonnières de la puissance produite par la centrale solaire 4, celle-ci doit être associée à une centrale hydroélectrique 5 également branchée sur le réseau local de distribution 3.

Comme la puissance apportée par l'énergie solaire peut être très faible ou nulle, cette centrale hydroélectrique 5 doit avoir une puissance nominale du même ordre que celle de la centrale solaire 4 afin de répondre, éventuellement à elle seule, aux besoins estimés de consommation dans le territoire.

Cependant, comme indiqué plus haut, une centrale hydroélectrique de type classique, capable de fournir la puissance nécessaire, devrait être alimentée par une réserve d'eau importante en noyant, par conséquent, une partie de la vallée.

Pour réaliser une centrale hydroélectrique ayant la puissance nécessaire et, cependant, bien intégrée dans l'environnement, l'inventeur a, donc, eu l'idée que, dans le cas d'un territoire suffisamment vallonné et comportant un ou plusieurs bassins versants, il serait possible d'exploiter la plus grande partie possible des ressources hydrauliques de ce territoire, en répartissant sur toute l'étendue de celui-ci, un grand nombre de réserves de dimensions assez réduites pour ne pas perturber l'environnement et permettant, cependant, de capter le débit de l'ensemble des cours d'eau, plus ou moins importants, s'écoulant dans le bassin entourant la centrale hydraulique.

On avait déjà proposé, dans des régions vallonnées, de profiter du relief du terrain pour réaliser des retenues dites collinaires permettant, en période pluvieuse, de mettre en réserve une certaine quantité d'eau afin d'alimenter un réseau d'irrigation en période sèche. L'idée de l'invention est, donc, d'adapter cette technique à la production hydroélectrique, en multipliant les retenues ménagées sur la plus grande partie des cours d'eau du bassin versant et en les reliant, par des conduites de dérivation, à un bassin tampon, de façon que l'ensemble constitue une réserve d'eau assez importante pour alimenter une centrale hydraulique capable de compléter la production irrégulière d'une centrale solaire et, même, de se substituer à celle-ci pour fournir une puissance électrique répondant aux besoins d'un territoire isolé.

Comme le montre, en effet, la figure 1, l'agglomération 2 destinée à être alimentée en courant par la centrale solaire 4 est située à proximité d'un bassin versant (A), traversé par de nombreux cours d'eau 11, 11' formant plusieurs réseaux ramifiés 1,1', parcourus par des débits qui varient en fonction de la pluviométrie et de la saison.

Selon le relief du terrain, de tels réseaux peuvent rejoindre des ruisseaux ou torrents formant des canaux de déversement 13,13 qui s'écoulent, par exemple, vers une rivière 10 traversant la vallée.

Au débouché de chaque réseau 1, l'entrée du canal de déversement 13 est barrée par une petite digue ou un simple seuil 14 formant un petit lac de retenue 15.

Par ailleurs, une prise d'eau 61 ménagée en amont du seuil 14 permet de prélever au moins une partie réglable du débit d'eau dans le réseau 1 pour alimenter une conduite de dérivation 62 débouchant dans un bassin tampon 6 retenu par une digue 64 et se trouvant au dessus d'une centrale hydroélectrique 5 placée à un niveau inférieur et comportant un groupe hydroélectrique 51 alimenté par une conduite forcée 52 à partir du bassin tampon 6. Le débit d'eau ainsi dérivé vers le bassin 6 par la conduite 62 peut être réglé par une vanne 65.

Dans certains cas, une autre partie du débit global du réseau 1 peut être prélevée, par exemple pour l'alimentation d'un réseau d'irrigation 12, au moyen d'un autre conduit de dérivation 16 sur lequel est placée une vanne 17 permettant de régler le débit prélevé en fonction des besoins d'irrigation qui dépendent, évidemment, de la saison et des conditions météorologiques. Si le débit global du réseau 1 dépasse la capacité prévue pour le lac 15, l'excès d'eau peut être rejeté en aval vers la rivière par le canal 13.

De la même façon, un seuil 14' ménagé au débouché d'un autre réseau l'permet de former un autre lac de retenue 15'sur lequel peut être prélevé le débit d'alimentation du bassin tampon 6, réglé par une vanne 65' et, le cas échéant, un débit d'alimentation d'un réseau d'utilisation 12', réglé par une vanne 17'.

Pour simplifier le dessin, la figure 1 ne montre, schématiquement, que deux réseaux de cours d'eau 1, 1' munis, à leur débouché, de seuils 14, 14'formant des lacs de retenue 15, 15' mais, en pratique, le bassin versant (A) s'étendant à proximité de la zone habitée 2 et de la centrale solaire 4 comporterait de nombreux réseaux de cours d'eau 1, 1' ... sur lesquels pourront être ménagés des seuils 14, 14' ... permettant la réalisation d'un assez grand nombre de petits lacs de retenue constituant des réserves secondaires 15, 15' ... réparties dans tout le bassin versant (A) et reliées par des conduites de dérivation 62, 62' ... au bassin tampon 6 qui alimente la centrale hydraulique 5.

Cette centrale hydraulique 5 comporte, comme habituellement, un ou plusieurs groupes hydroélectriques 51 alimentés chacun, à partir du bassin tampon 6, par une ou plusieurs conduites forcées 52, afin d'entraîner un générateur électrique tel qu'un alternateur 53 fournissant un courant alternatif qui est appliqué sur un poste de transformation 54 réglé de façon à produire un courant alternatif triphasé ayant des caractéristiques adaptées à celles du réseau local de distribution 3, l'eau ainsi turbinée étant rejetée vers la rivière par une conduite de sortie 55.

Par ailleurs, des moyens 56 de réglage du débit d'eau injecté dans le groupe hydroélectrique 51 par la conduite forcée 52 permettent de piloter, à chaque instant, la valeur de la puissance fournie par la centrale hydroélectrique 5.

Ce courant adapté, fourni par la centrale hydroélectrique 5, est appliqué sur le même poste de livraison 44 que le courant fourni par la centrale solaire 4 et celui-ci, ainsi alimenté en parallèle, permet d'injecter, dans le réseau 3, une puissance électrique correspondant, à chaque instant, à la somme des puissances fournies, respectivement, par la centrale solaire 4 et la centrale hydroélectrique 5.

D'autre part, la puissance du courant électrique produit par le poste de transformation 43 de la centrale solaire 4 est mesurée en permanence et appliquée sur une unité de contrôle 45 qui calcule, à chaque instant, la puissance à fournir par la centrale hydroélectrique 5 pour compenser les variations de la puissance fournie par la centrale solaire 4 et émet un ordre correspondant de commande des moyens 56 de réglage du débit d'eau alimentant le groupe hydroélectrique 51.

De préférence, une batterie d'accumulation de courant, non représentée sur le dessin, est branchée sur le réseau local 3 afin d'assurer une variation continue de la puissance globale fournie par les deux centrales 4,5.

Il est ainsi possible de régler, en permanence, à une valeur de consigne déterminée par l'unité de contrôle 45, la puissance globale produite par la centrale solaire 4 et la centrale hydroélectrique 5.

Comme on l'a indiqué, dans un premier mode de réalisation, la centrale solaire 4 peut être réalisée de façon à pouvoir produire une puissance nominale correspondant à une valeur globale estimée des besoins des consommateurs dans l'agglomération 2. De plus, la centrale hydroélectrique 5 est prévue pour produire une puissance nominale du même ordre.

Cette valeur estimée des besoins peut être déterminée statistiquement en fonction de l'importance de la population, de sa répartition dans le territoire et de ses activités, de façon à répondre aux besoins prévisibles de l'ensemble des usagers au cours d'une journée, en tenant compte des tranches horaires valorisées par le marché.

De la sorte, le territoire alimenté par l'association de ces deux centrales ayant, chacune, une puissance nominale suffisante pour répondre, à tout moment, aux besoins prévisibles de consommation de l'ensemble des usagers, peut se comporter de façon pratiquement autonome par rapport au réseau public qui ne sera sollicité éventuellement, sur ordre d'une unité de commande animée par un cerveau électronique approprié, que dans les cas occasionnels de pointes de consommation dépassant cette valeur moyenne estimée des besoins, pour apporter la puissance additionnelle nécessaire.

Grâce à ces dispositions, les deux centrales associées 4,5, peuvent donc, à tout moment, injecter dans le réseau 3 une puissance globale correspondant aux besoins de l'ensemble des usagers dans le territoire, malgré les variations inévitables de la puissance fournie par la centrale solaire 4. Celle-ci alimente en permanence le réseau 3, alors que la centrale hydraulique 5, alimentée par la conduite 52, avec un débit réglé, à chaque instant, par la vanne 56, ne fonctionne que pour fournir la puissance complémentaire permettant de respecter, à l'instant considéré, la valeur de consigne sur laquelle est réglée l'unité de contrôle 45.

En période ensoleillée et sèche, la puissance électrique est fournie essentiellement par la centrale solaire 4 dont la puissance peut varier jusqu'à sa valeur nominale. La centrale hydraulique 5 n'a, donc, besoin que d'un débit limité pour compenser une baisse de production solaire en fin de journée ou la nuit. Les réserves secondaires 15 ne fournissent, alors, que le débit éventuellement nécessaire aux réseaux d'irrigation 12 et le débit disponible peut s'accumuler, afin d'être mis en réserve pour une utilisation future.

En période humide ou de faible ensoleillement, la production de la centrale solaire est faible ou nulle mais le débit dans les cours d'eau 11 augmente et les réseaux d'irrigation 12 peuvent être fermés. Un débit important reste disponible et peut être dirigé vers la réserve principale 6 ou bien être accumulé dans les réserves secondaires 15 afin de répondre, ensuite, à une augmentation des besoins.

Le nombre et les dimensions des retenues collinaires 15 peuvent, donc, être déterminés de façon que leur capacité globale permette, d'une part, d'accumuler tout le débit d'eau disponible lorsque les besoins de consommation sont faibles, en particulier la nuit et, d'autre part, de faire fonctionner la centrale hydraulique pour alimenter le réseau 3 à la puissance souhaitée, pendant le temps nécessaire au rétablissement de la puissance solaire.

Il est à noter, à cet égard, que l'utilisation d'un grand nombre de lacs de retenue 15 répartis sur tout le bassin versant pour réaliser, ensemble, la réserve d'eau nécessaire au fonctionnement de la centrale hydraulique, permet de donner aux digues 14 et aux lacs de retenue 15 des dimensions assez réduites pour diminuer les risques de perturbation de l'environnement, en respectant l'activité agricole ou touristique de la région.

En pratique, la hauteur des digues de retenue 14 ne devrait pas dépasser une quinzaine de mètres..

De plus, comme le bassin tampon 6, placé au dessus de la centrale hydraulique 5, peut être alimentée en permanence par l'ensemble des réserves 15, ses dimensions peuvent être limitées, le barrage de retenue 64 n'ayant qu'une faible hauteur et pouvant être constitué, comme les digues 14, d'un simple remblai associé à une paroi étanche, pouvant mieux s'intégrer dans l'environnement qu'un barrage en béton.

Grâce à ces dispositions, l'installation selon l'invention permet de répondre à tout moment et avec souplesse aux besoins variables de consommation du réseau local de distribution 3, en tenant compte des variations quotidiennes et saisonnières de l'énergie solaire captée par les panneaux 41 de la centrale solaire 4.

Comme on l'a indiqué, dans ce premier mode de réalisation de l'invention, la puissance nominale de la centrale solaire 4, ainsi que celle de la centrale hydraulique 5 sont déterminées en fonction d'une valeur moyenne estimée des besoins globaux de consommation qui peut être déterminée statistiquement à partir des observations faites sur une longue période et en tenant compte de la saison et de l'heure dans la journée. De la sorte, c'est seulement en cas de dépassement imprévu de cette valeur estimée qu'une puissance additionnelle sera fournie par le réseau public sur lequel le réseau local 3 reste branché.

Toutefois, dans un mode de réalisation préférentiel, la puissance nominale des deux centrales associées pourra être déterminée en fonction d'une valeur maximale prévisible des besoins, estimée, en particulier, en tenant compte de l'évolution de la technique et d'une modification attendue du comportement des usagers et de la réglementation, notamment pour le chauffage des habitations et les transports.

Ainsi, une installation selon l'invention pourra être prévue à l'avance en fonction d'une augmentation prévisible des besoins de consommation en puissance électrique pour assurer, de façon quasi-autonome, l'alimentation en courant d'une région relativement isolée, sans nécessiter l'engagement de dépenses importantes sur le réseau public de transport d'électricité.

Une telle installation autonome serait, d'ailleurs, particulièrement utile pour l'équipement de régions complètement isolées, par exemple en Afrique, car on pourrait, ainsi, éviter la construction de lignes, très onéreuses, de transport du courant à très haute tension.

Il est à noter, par ailleurs, que, dans une centrale hydraulique de type classique, la ou les conduites d'alimentation en eau du groupe de production hydroélectrique sont habituellement constituées de tubes métalliques formant des conduites forcées qui peuvent dénaturer le paysage.

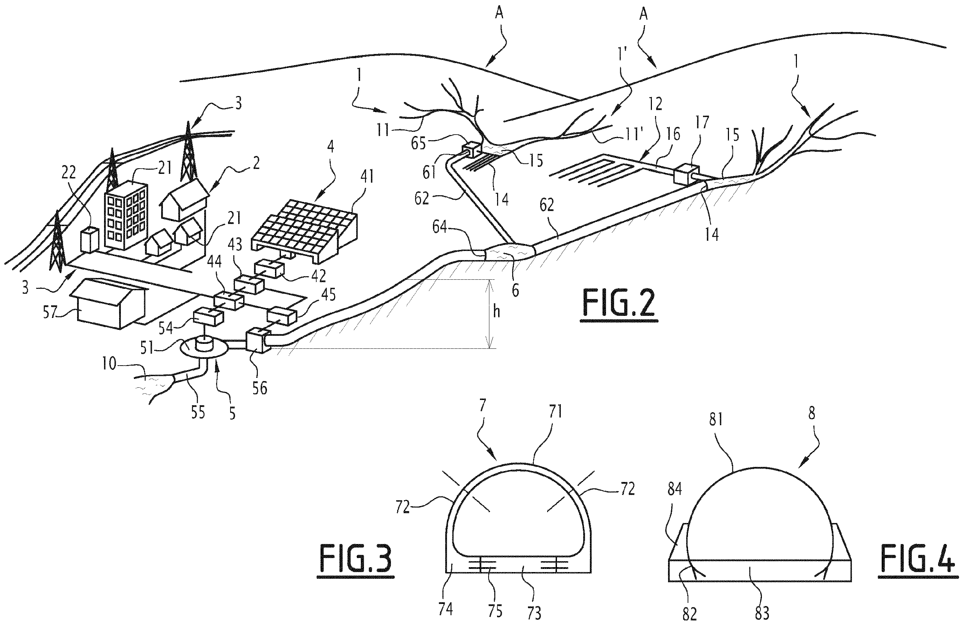

Selon une autre caractéristique particulièrement avantageuse de l'invention, la conduite 52 d'alimentation en eau du groupe hydroélectrique 5 peut être constituée d'éléments préfabriqués formant des tronçons posés l'un à la suite de l'autre sur un lit de béton coulé en place, ce qui permet de suivre, au plus près, le profil du terrain, de la façon représentée schématiquement sur la figure 2. Une conduite ainsi réalisée serait, ainsi, mieux intégrée dans l'environnement qu'une conduite forcée classique. D'ailleurs, on pourrait réaliser de la même façon les conduites de dérivation 62 reliant chacune des réserves secondaires 15 à la réserve principale 6.

De plus, les conduites ainsi constituées d'éléments préfabriqués posés sur une semelle coulée en place pourraient être enterrées au moins partiellement, ce qui permettrait de perturber le moins possible le paysage et de faciliter le maintien d'une activité agricole, notamment d'élevage.

Selon une autre caractéristique particulièrement avantageuse de l'invention, il est possible de réaliser la conduite d'alimentation 52 de la façon représentée sur la figure 3, dans laquelle chaque tronçon 7 de la conduite 52 est réalisé à partir d'éléments préfabriqués en béton armé ou précontraint et comporte, en section transversale, un élément de voûte 71 prenant appui sur deux éléments de côté formant des piédroits écartés 72 ayant une partie supérieure incurvée en arc de cercle se raccordant tangentiellement à l'élément de voûte 71 et une base plane 74 posée sur le sol et se raccordant à une dalle 73.

Une telle disposition, décrite en détail dans le document EP 0 081 402, permet de réaliser des conduites ayant une section transversale de plusieurs mètres carrés, ce qui présente de grands avantages dans son application à la présente invention.

En effet, une telle conduite de grande section et de grande longueur limite un volume très important et, quand elle est pleine d'eau, peut constituer une réserve supplémentaire capable de compenser la capacité limitée de la réserve principale 6, en s'ajoutant aux réserves secondaires 15.

En particulier, la section transversale de la conduite 52 pourra être déterminée, compte tenu de la distance entre la digue 64 et la turbine 51, de façon à limiter un volume d'eau suffisant pour assurer le fonctionnement de la centrale hydroélectrique 2 quelles que soient les variations de la production demandée, la réserve d'eau étant, alors, constituée par l'eau contenue dans la conduite d'alimentation 52, depuis la turbine 51 jusqu'au niveau (h) au dessus de celle-ci.

Par ailleurs, pour réaliser une certaine longueur de la conduite 52, on peut mettre en place, sur le fond aplani d'une tranchée, deux séries écartées d'éléments de coté 72 reposant, chacun, sur leur base 74 qui a été munie, à l'avance, d'armatures en attente 75. On pose, alors, sur les extrémités supérieures des éléments de coté 72 une série d'éléments de voûte 71 fermant la section vers le haut. On peut, alors, réaliser une semelle en béton armé 73 qui est coulée entre les extrémités en regard des bases 74 en noyant les armatures 75, de façon à solidariser l'ensemble.

Une telle conduite, constituée d'éléments préfabriqués adjacents, placés à l'avancement l'un à la suite de l'autre, peut, ainsi, suivre le profil du terrain naturel sans travaux importants de terrassement, de la façon indiquée sur la figure 2.

Mais d'autres procédés peuvent être utilisés pour réaliser une conduite de très grande section transversale reposant sur une dalle en béton coulée sur place. Ainsi, dans une autre disposition représentée à titre d'exemple sur la figure 4, la conduite 8 peut être constituée d'une suite d'éléments cintrés 81 en tôle métallique, ayant leurs extrémités soudées sur des profilés en attente 82 scellés dans une base en béton 83 coulée sur place.

Il faut, cependant, que la conduite métallique de grande section, qui sert de réservoir, résiste aux différences de pression interne résultant des variations de niveau de l'eau. C'est pourquoi, la conduite métallique 81 pourrait avantageusement, être renforcée par des contreforts latéraux 84.

Dans les deux cas, il est possible d'adapter le profil des éléments préfabriqués 71,72 ou des tôles cintrées 81 pour réaliser des parties courbes permettant de suivre le profil du terrain naturel.

Bien entendu, l'invention ne se limite pas aux dispositions qui viennent d'être décrites à titre d'exemple et couvre, au contraire, toutes les variantes restant dans le cadre de protection défini par les revendications et permettant, notamment, de s'adapter à des situations particulières.

Par exemple, on a indiqué plus haut que la puissance complémentaire fournie par la centrale hydroélectrique peut être régulée, de façon classique, par réglage du débit d'eau admis dans les turbines mais on pourra, évidemment, utiliser à cet effet, tous les moyens connus pour le fonctionnement d'une centrale hydraulique.

D'autre part, il est avantageux, pour conserver de l'eau en réserve, de régler la production de la centrale hydraulique 5 en fonction de la production, au même instant, de la centrale solaire 4, afin que la puissance globale produite et injectée dans le réseau local de distribution 3 corresponde seulement aux besoins locaux de consommation à l'instant considéré.

Cependant, ces possibilités de réglage de la puissance produite dépendent aussi des conditions de production.

Ainsi, dans une période où les réserves d'eau sont importantes, ou bien une période de très fort ensoleillement, il peut être intéressant de ne pas limiter la puissance produite aux seuls besoins de consommation. Bien entendu, le surplus de puissance pourrait être absorbé par le réseau public de distribution mais, comme on l'a indiqué plus haut, le transport de puissance électrique est relativement coûteux et entraîne des pertes.

Selon une autre caractéristique de l'invention, il serait, donc, plus avantageux d'utiliser sur place la puissance produite dépassant les besoins de consommation dans une installation annexe alimentée par le réseau 3, telle qu'une usine 57 de production d'hydrogène, par exemple par électrolyse. Une telle production pourrait, en effet, être rentable du fait que, dans l'invention, la puissance électrique est produite uniquement à partir d'énergie renouvelable non carbonée et que, le territoire étant relativement isolé, une telle usine utiliserait seulement le surplus d'énergie disponible après satisfaction des besoins locaux. Pour la même raison, le surplus d'énergie pourrait aussi être utilisé pour le stockage, par exemple par liquéfaction, de l'hydrogène ainsi produit, afin de constituer une réserve d'énergie.

Par ailleurs, on a décrit l'invention dans son application à la production de puissance électrique pour un territoire relativement isolé à l'intérieur d'un pays développé, équipé d'un réseau public de production et de transport d'électricité. D'une façon générale, cependant, l'invention présenterait également de grands avantages pour l'alimentation en électricité d'une région trop éloignée des centres industriels pour être reliée à un réseau public de transport de puissance mais bénéficiant d'un fort ensoleillement et disposant d'un territoire bien arrosé par de nombreux cours d'eau comme, par exemple, dans certaines régions isolées d'Afrique, d'Asie ou d'Amérique du sud.

## Revendications

1. Procédé de production locale d'une puissance électrique destinée à répondre à des besoins variables de consommation dans un territoire isolé équipé d'un réseau local de distribution d'électricité (3), procédé dans lequel le réseau local de distribution est alimenté par au moins deux dispositifs de production d'électricité à partir d'énergies renouvelables, respectivement un premier dispositif (4) de transformation de l'énergie du rayonnement solaire comportant des moyens (41) de production d'un courant électrique de base à partir du rayonnement solaire et des moyens (43) de transformation dudit courant de base en un courant alternatif ayant des caractéristiques adaptées audit réseau local de distribution (3), un second dispositif (5) de transformation de l'énergie hydraulique d'une chute d'eau comportant au moins un groupe hydroélectrique (51) placé à un niveau inférieur et alimenté par au moins une conduite forcée (52) à partir d'une réserve d'eau ménagée à un niveau supérieur, pour la production d'un courant électrique ayant des caractéristiques adaptées au réseau local de distribution (3), et des moyens (44) d'injection dans ledit réseau local (3), des courants adaptés produits, respectivement, par les deux dispositifs de transformation d'énergie, **caractérisé par le fait que** le premier dispositif de transformation de l'énergie solaire est une centrale solaire (4) ayant une puissance nominale correspondant à une valeur globale estimée des besoins de consommation des usagers dans le territoire, que le second dispositif de transformation de l'énergie hydraulique est une centrale hydroélectrique (5) ayant une puissance nominale du même ordre que celle de la centrale solaire (4) et que, le territoire comportant un bassin versant (A) dans lequel l'eau pluviale forme un ensemble (1) de cours d'eau (11) ayant des débits variables et s'écoulant vers l'aval, la réserve d'eau de la centrale hydroélectrique (5) est constituée d'une pluralité de petites retenues collinaires (15) réparties sur l'ensemble du bassin versant (A), qui sont ménagées sur au moins une partie des cours d'eau (11) du bassin (A) et sont reliées par des moyens (62) de dérivation d'au moins une partie disponible du débit de chacun desdits cours d'eau (11), à un bassin tampon (6) débouchant dans la conduite forcée (52) d'alimentation du groupe hydroélectrique (51).

2. Procédé selon la revendication 1 de production locale d'une puissance électrique, **caractérisé par le fait que**, le réseau local de distribution (3) étant relié à un réseau public de transport de puissance électrique, la puissance nominale de la centrale solaire (4) ainsi que celle de la centrale hydroélectrique (5) correspondent à une valeur moyenne estimée des besoins de consommation dans le territoire, et que le surplus de puissance nécessaire en cas de dépassement desdits besoins est apporté au réseau local (3) par le réseau public de transport.

3. Procédé selon la revendication 1 de production locale d'une puissance électrique, **caractérisé par le fait que** la puissance nominale de la centrale solaire (4) ainsi que celle de la centrale hydroélectrique (5) correspondent à une valeur maximale prévisible des besoins de consommation des usagers dans le territoire, et que la centrale hydroélectrique (5) est munie de moyens (56) de réglage de la puissance qu'elle fournit, en fonction de la demande variable, en électricité, des usagers dans le territoire, afin que la puissance hydroélectrique ainsi fournie compense, à tout moment, les variations de puissance quotidiennes ou saisonnières de la centrale solaire (4).

4. Procédé selon la revendication 3, **caractérisé par le fait que** la production de la centrale hydroélectrique (5) est réglée de façon que la puissance globale injectée dans le réseau par les deux centrales, solaire (4) et hydroélectrique (5), dépasse la puissance seulement nécessaire pour répondre aux besoins de consommation des usagers à l'instant considéré, le surplus de puissance servant alors à une autre utilisation.

5. Procédé selon la revendication 4, **caractérisé par le fait que** le surplus de puissance produit par l'ensemble des deux centrales (4,5) est utilisé pour le fonctionnement d'une installation (57) de production d'hydrogène liquide.

6. Procédé selon l'une des revendications précédentes, de production locale d'une puissance électrique, **caractérisé par le fait que** la centrale hydroélectrique (5) est alimentée, à tout moment, par la totalité du débit disponible provenant de l'ensemble des cours d'eau (11), compte tenu des autres utilisations de l'eau prévues à ce moment, de façon à fournir en permanence la puissance électrique maximale possible et que le réseau local de distribution (3) alimente au moins une installation d'utilisation et de mise en réserve de la part de la puissance électrique globale fournie par les deux centrales (4,5), dépassant les besoins de consommation à l'instant considéré.

7. Procédé selon l'une des revendications précédentes, **caractérisé par le fait que** le territoire comporte au moins un circuit (12) d'utilisation de l'eau provenant d'au moins l'un des cours d'eau (11) traversant le bassin d'écoulement (A) et que la centrale hydroélectrique (5) est alimentée par une partie disponible du débit d'au moins l'un desdits cours d'eau (11), après déduction du débit nécessaire audit circuit d'utilisation (12).

8. Procédé selon l'une des revendications précédentes, **caractérisé par le fait que**, au moins une partie des cours d'eau (11) du bassin d'écoulement (A) sont munis de seuils (14) permettant, chacun, de retenir un lac (15) constituant une réserve d'eau secondaire et que lesdits lacs de retenue (15) sont répartis sur l'ensemble du territoire et sont reliés par des conduites de dérivation (62) à la réserve d'eau principale (6) alimentant le groupe hydroélectrique (51).

9. Procédé selon l'une des revendications 7 et 8, **caractérisé par le fait que** la réserve d'eau principale (6) alimentant le groupe hydroélectrique (51) est retenue par une digue (64) dont la hauteur est telle que le lac de retenue (6) ainsi constitué ne perturbe pas sensiblement l'environnement dans le territoire.

10. Procédé selon l'une des revendications précédentes, **caractérisé par le fait que** les moyens (52) d'amenée de l'eau au groupe hydroélectrique (51) comprennent au moins une conduite (7) dont la section permet, compte tenu de la hauteur de chute (h), de contenir au moins une partie de la quantité d'eau nécessaire au fonctionnement du groupe hydroélectrique (51) pour la production d'une puissance électrique capable de compenser une insuffisance de la puissance fournie par la centrale solaire (4) pendant le temps nécessaire au rétablissement de cette puissance.

11. Installation de production locale d'une puissance électrique destinée à répondre à des besoins variables de consommation dans un territoire isolé équipé d'un réseau local de distribution d'électricité (3), installation dans laquelle le réseau de distribution (3) est alimenté par au moins deux dispositifs de production d'électricité à partir d'énergies renouvelables, respectivement un premier dispositif (4) de transformation de l'énergie du rayonnement solaire comportant des moyens (41) de production d'un courant électrique de base à partir du rayonnement solaire et des moyens (43) de transformation dudit courant de base en un courant alternatif ayant des caractéristiques adaptées audit réseau local de distribution, un second dispositif (5) de transformation de l'énergie hydraulique d'une chute d'eau comportant une réserve d'eau (6) placée à un premier niveau et reliée par des moyens (52) d'amenée de l'eau à au moins un groupe hydroélectrique (51), placé à un second niveau, inférieur au premier, pour la production d'un courant électrique ayant des caractéristiques adaptées au réseau local de distribution (3), et des moyens (44) d'injection dans ledit réseau local (3), des courants adaptés produits, respectivement, par les deux dispositifs (4,5) de transformation d'énergie, **caractérisée par le fait que** le premier dispositif de transformation de l'énergie solaire est une centrale solaire (4) ayant une puissance nominale correspondant à une valeur globale estimée des besoins de consommation du territoire, que le second dispositif de transformation de l'énergie hydraulique est une centrale hydroélectrique (5) ayant une puissance nominale du même ordre que celle de la centrale solaire (4) et que, le territoire comportant un bassin d'écoulement (A) traversé par un ensemble (1) de cours d'eau (11) ayant des débits variables, la réserve d'eau (6) de la centrale hydroélectrique (5) est alimentée à partir d'une pluralité de prises d'eau (15) ménagées sur au moins une partie des cours d'eau (11) du bassin d'écoulement (A), et reliées à la réserve d'eau (6) par des moyens (62) de dérivation d'au moins une partie disponible du débit de chacun desdits cours d'eau (11).

12. Installation selon la revendication 11 de production locale d'une puissance électrique, **caractérisée par le fait que** la puissance nominale de la centrale solaire (4) ainsi que celle de la centrale hydroélectrique (5) correspondent à une valeur maximale estimée des besoins de consommation des usagers dans le territoire, que la centrale hydroélectrique (5) est munie de moyens (56) de réglage de la puissance qu'elle fournit, en fonction des besoins variables de consommation appliqués sur le réseau local (3) par les usagers dans le territoire, afin que la puissance hydroélectrique ainsi fournie compense, à tout moment, les variations de puissance quotidiennes ou saisonnières de la centrale solaire (4).

13. Installation selon la revendication 11 de production locale d'une puissance électrique, **caractérisée par le fait que** la puissance nominale de la centrale solaire (4) ainsi que celle de la centrale hydroélectrique (5) correspondent à une valeur maximale estimée des besoins de consommation des usagers dans le territoire et que l'installation comprend des moyens (57) d'utilisation et de mise en réserve du surplus de puissance produite par les deux centrales, respectivement solaire (4) et hydroélectrique (5), dépassant la puissance seulement nécessaire pour répondre aux besoins de consommation des usagers à l'instant considéré.

14. Installation selon la revendication 13, **caractérisée par le fait qu'**elle comprend une installation (57) de production et de stockage d'hydrogène liquide branchée sur le réseau local de distribution (3) et alimentée par le surplus de puissance disponible sur ledit réseau local (3), après satisfaction des besoins de consommation des usagers.

15. Installation selon l'une des revendications 11 à 14, **caractérisée par le fait qu'** elle comprend une pluralité de seuils (14) ménagés sur au moins une partie des cours d'eau (11) du bassin d'écoulement (A) et permettant, chacun, de retenir un lac constituant une réserve d'eau secondaire (15) et que lesdits lacs de retenue (15) sont répartis sur l'ensemble du territoire et sont reliés par des conduits de dérivation (62) à la réserve d'eau principale (6) alimentant la centrale hydroélectrique (5).

16. Installation selon l'une des revendications 11 à 15, **caractérisée par le fait que** la réserve d'eau principale (6) alimentant la centrale hydroélectrique est retenue par une digue (64) dont la hauteur est telle que le lac de retenue ainsi constitué ne perturbe pas sensiblement l'environnement dans le territoire.
